# EUROPÄISCHE PATENTANMELDUNG

(11) **EP 4 475 407 A1**
(43) Veröffentlichungstag der Anmeldung: **11.12.2024**
(21) Anmeldenummer: 24179159.9
(22) Anmeldetag: 31.05.2024
(51) Int. Cl.: H02K 41/02, H02K 5/22, H02K 5/10, B60L 13/00, B65G 15/00, H01B 7/00

(54) **ELEKTROMAGNETISCHES TRANSPORTSYSTEM**

(30) Priorität: 02.06.2023 AT 504342023
(71) Anmelder: B&R Industrial Automation GmbH, 5142 Eggelsberg (AT)
(72) Erfinder: Tutschka, Thomas, 5110 Oberndorf (AT); Froese, Marc-Frederick, 78465 Konstanz (DE)
(74) Vertreter: Patentanwälte Pinter & Weiss OG

(57) **Zusammenfassung**

Die Erfindung betrifft ein elektromagnetisches Transportsystem (1) mit einem Stator (2) und zumindest einer Transporteinheit (3), die entlang des Stators (2) bewegbar angeordnet ist. Der Stator (2) weist dabei zumindest ein Antriebsmodul (4) mit einem luftdichten Gehäuse (6) auf, in welchem eine Mehrzahl an Antriebsspulen (5) angeordnet ist. Weiterhin ist ein Versorgungskabel (8) vorgesehen, welches den Stator (2) bzw. das zumindest eine Antriebsmodul (4) für eine Bestromung der Antriebsspulen (5) mit einer Versorgungsspannung (V) verbindet. In das Versorgungskabel (8) ist ein Leerrohr (11) integriert, welches innerhalb eines Außenmantels (13) des Versorgungskabels (8) angeordnet ist. Das Leerrohr (11) ist an einem versorgungsseitigen Ende (9) des Versorgungskabel (8) mit einer Öffnung versehen. Ein antriebsmodulseitiges Ende (10) des Versorgungskabels (8) ist mit dem zumindest einen Antriebsmodul (4) derart verbunden, dass ein Austausch eines Mediums, insbesondere ein Luftaustausch, zwischen einem vom luftdichten Gehäuse (6) gebildeten Innenraum des zumindest einen Antriebsmoduls (4) und einer Umgebung (12) im Bereich der Versorgungsspannung (V), wie z.B. einem Schaltschrank, nur über das Leerrohr (11) erfolgt.

## Beschreibung

Die gegenständliche Erfindung betrifft allgemein das Gebiet des Anlagenbaus, insbesondere den Bereich der Automatisierungstechnik. Die gegenständliche Erfindung betrifft ein elektromagnetisches Transportsystem mit einem Stator und zumindest einer Transporteinheit, die entlang des Stators bewegbar angeordnet ist, wobei der Stator zumindest ein Antriebsmodul mit einem luftdichten Gehäuse aufweist, in welchem eine Mehrzahl an Antriebsspulen angeordnet ist, und wobei ein Versorgungskabel vorgesehen ist, welches den Stator bzw. das zumindest eine Antriebsmodul für eine Bestromung der Antriebsspulen mit einer Versorgungsspannung verbindet.

### Stand der Technik

Heutzutage ist es in den meisten modernen Produktionsanlagen erforderlich, Bauteile oder Komponenten - teilweise auch über längere Transportstrecken hinweg - mit Transportsystemen zwischen den einzelnen Handhabungs- oder Produktionsstationen zu bewegen. Für diesen Transport können unterschiedliche Transport- und Fördersysteme eingesetzt werden, wie z.B. Stetigförderer bzw. Förderbänder in verschiedenen Ausführungen, bei welchen eine Drehbewegung eines elektrischen Antriebs in eine lineare Bewegung umgesetzt wird. Mit derartigen Stetigförderern ist allerdings die Flexibilität erheblich eingeschränkt, vor allem ein individueller Transport von einzelnen Transporteinheiten ist nicht möglich. Um den Anforderungen von modernen und flexiblen Transportsystemen gerecht zu werden, werden häufig elektromagnetische Transportsysteme in Form von Langstatorlinearmotoren (kurz: LLM) und/oder in Form von Planarmotoren (kurz: PM) eingesetzt, deren Funktionsweise sowie deren Anwendungen aus dem Stand der Technik hinlänglich bekannt sind.

Ein Langstatorlinearmotor besteht allgemein aus einem einen Stator, der auch als "Langstatorlinearmotorstator" oder "LLM-Stator" bezeichnet werden kann, und zumindest einer Transporteinheit, welche auch als "Shuttle" oder "Läufer" bezeichnet wird. Üblicherweise setzt sich der Stator aus zumindest einem, meist einer Vielzahl an Antriebsmodulen zusammen. Am Stator bzw. an den Antriebsmodulen ist eine Mehrzahl an Antriebsspulen ortsfest nebeneinander angeordnet. Die Antriebsmodule können dabei unterschiedliche Geometrien (z.B. Geraden, Kurven, Weichen, etc.) aufweisen. Die einzelnen Antriebsmodule werden dann zu einem Stator in gewünschter Länge und/oder Form zugesetzt. Der Stator bildet dann eine Transportstrecke aus, entlang welcher eine Transporteinheit oder mehrere Transporteinheiten unabhängig voneinander bewegt werden können. Auf der Transporteinheit ist eine Anzahl an Antriebsmagneten angeordnet, von welchen ein magnetisches Erregungsfeld erzeugt wird. Dieses wirkt mit einem elektro-magnetischen Feld der Antriebsspulen des Stators bzw. der Antriebsmodule zusammen, um die Transporteinheit zu bewegen. Durch entsprechende Ansteuerung der einzelnen Antriebsspulen - in der Regel durch Anlegen einer entsprechenden elektrischen Spannung bzw. entsprechende Bestromung der Antriebsspulen - wird im Bereich der Transporteinheit der magnetische Fluss geregelt und eine Vortriebskraft auf die Transporteinheit erzeugt bzw. die Größe der Vortriebskraft beeinflusst, um die Transporteinheit in gewünschter Weise entlang der Transportstrecke zu bewegen. Für die Bestromung der Antriebsspulen wird der Stator bzw. das zumindest eine Antriebsmodul über ein Versorgungskabel mit einer Versorgungsspannung verbunden. Beispiele für Langstatorlinearmotoren sind beispielsweise aus der WO 2013/143783 A1, der US 6,876,107 B2, der US 2013/0074724 A1 oder der WO 2015/042409 A1 bekannt.

Planarmotoren, welche ebenfalls als Transportsysteme genutzt werden, können beispielsweise in Produktionsprozessen für sehr flexible Transportprozesse mit komplexen Bewegungsprofilen eingesetzt werden. Wie der Langstatorlinearmotor, weist auch der Planarmotor einen Stator auf, der eine Transportebene ausbildet, in der eine oder mehrere Transporteinheiten zumindest zweidimensional bewegt werden können. Der Stator ist üblicherweise aus einem oder mehreren Antriebsmodulen aufgebaut. Für die Bewegung der Transporteinheit in der Transportebene, wird - wie beim Langstatorlinearmotor - eine auf die Transporteinheit wirkende Antriebskraft erzeugt, indem ein magnetisches Erregungsfeld, welches z.B. von Antriebsmagneten der Transporteinheit erzeugt wird, mit einem Magnetfeld des Stators bzw. des zumindest einen Antriebsmodul zusammenwirkt. Damit eine Bewegung der Transporteinheit in eine bestimmte Bewegungsrichtung bewirkt wird, muss zumindest eines der Magnetfelder, meist das Magnetfeld des Stators bzw. des zumindest einen Antriebsmoduls, zeitlich veränderlich sein. Das andere Magnetfeld, üblicherweise das an der Transporteinheit, ist üblicherweise konstant bzw. zeitlich nicht veränderbar und wird z.B. von Permanentmagneten gebildet, welche auch als Antriebsmagnete bezeichnet werden. Das zeitlich veränderliche Magnetfeld wird beispielsweise mittels Antriebsspulen erzeugt, welche z.B. in der Transportebene des Planarmotors (d.h. am Stator bzw. am zumindest einen Antriebsmodul), in manchen Ausführungen auch in mehreren Ebenen angeordnet sind. Die Antriebsspulen werden in der Regel von einer Steuerungseinheit angesteuert und entsprechend bestromt, um ein bewegtes Magnetfeld in die gewünschte Bewegungsrichtung zu erzeugen. Zum Bestromen der Antriebsspulen der Antriebsmodule ist ebenfalls ein Versorgungskabel vorgesehen, welches den Stator mit einer Versorgungsspannungsquelle verbindet.

Um die für den Planarmotor charakteristische zweidimensionale Bewegung der Transporteinheit zu ermöglichen, bedarf es einem zweidimensionalen Zusammenwirken der Magnetfelder des Stators bzw. des zumindest einen Antriebsmoduls und der Transporteinheiten, wobei eines der beiden Magnetfelder in zumindest zwei Dimensionen oder beide Magnetfelder in zumindest einer Dimension zeitlich veränderlich sein müssen. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen der Transporteinheit in der Transportebene möglich sind. Aus der US 9,202,719 B2 oder der DE 10 2017 131 324 A1 ist beispielsweise ein grundlegender Aufbau und die Funktionsweise eines Planarmotors bekannt. Weiters werden in der EP 3 172 156 B1 oder in der EP 3 172 134 B1 Anwendungen eines Planarmotors als Transportsystem gezeigt.

Üblicherweise weisen die Antriebsmodule - sowohl beim Langstatorlinearmotor als auch beim Planarmotor - eine Mehrzahl an Antriebsspulen auf, welche jeweils meist fest im Antriebsmodul fixiert sind. Dazu werden die Antriebsspulen beispielsweise positionsgenau auf einem Grundkörper angeordnet und dann von einem Gehäuse umgeben. Um die Antriebsspulen je nach Anwendungsbereich des Transportsystems z.B. vor äußeren Einflüssen, Feuchtigkeit, Staub, chemischer Verunreinigung zu schützen, ist das Gehäuse des jeweiligen Antriebsmoduls luftdicht abgeschlossen bzw. annähernd hermetisch abgeschlossen ausgeführt.

Durch das Bestromen der Antriebsspulen bzw. durch das Anlegen einer in Höhe und Dauer geregelten Spulenspannung wird im Stator bzw. in den einzelnen Antriebsmodulen während des Betriebs des Transportsystems Wärme aufgrund von elektrischer Verlustleistung erzeugt, wobei die Wärmeerzeugung im Stator bzw. in den einzelnen Antriebsmodulen und auch in den einzelnen Antriebsspulen eines Antriebsmoduls - in Abhängigkeit von einem Bewegungsprofil der Transporteinheit und einer Anzahl an Bewegungszyklen - zeitlich schwanken kann. Durch die Wärmeerzeugung kann die Temperatur eines Antriebsmodul bzw. in einem vom Gehäuse des Antriebsmoduls gebildeten Innenraum ansteigen. Die in den Antriebsmodulen des Stators entstehende Wärme kann beispielsweise durch Kühlung, Wärmeleitung und/oder andere Wärmeausgleichsmechanismen abgeleitet werden oder die Temperatur in den Antriebsmodulen durch Abkühlung aufgrund absinkender elektrischer Verlustleistung wieder sinken. Dadurch kann es im Betrieb des Transportsystems in den einzelnen Antriebsmodulen des Stators zu Temperaturschwankungen kommen. Derartige Temperaturschwankungen können in einem von einem Gehäuse luftdicht abgeschlossenen Antriebsmodul einen Überdruck oder Unterdruck bzw. Druckschwankungen verursachen. Weiterhin kann es aufgrund von externen Einflüssen, wie z.B. Änderung der Umgebungsbedingungen, zu Überdruck oder Unterdruck im zumindest einen Antriebsmodul der Transportsystems kommen. Die Druckschwankungen bzw. Druckunterschiede zwischen einem Antriebsmodulinnenraum und einem Umgebungsdruck außerhalb des Gehäuses des Antriebsmoduls können z.B. zu Verformungen des Gehäuses oder von Deckblecken, Schwächung von Schweißnähten oder rascherer Alterung von Dichtungen durch mechanischen Stress, etc. führen. In der Folge besteht beispielsweise die Gefahr von mechanischer Beschädigung der Transporteinheiten oder der Schutzfunktion des Gehäuses sowie zu einer Verringerung der Verfügbarkeit bzw. Lebensdauer des Transportsystems.

Um in einem Antriebsmodule Über- oder Unterdruck zu verhindern, kommen beispielsweise separate Druckausgleichselemente zum Einsatz, welche z.B. einen Innendruck der geschlossenen Antriebsmoduls des Transportsystems an einen Umgebungsdruck anpassen. Derartige Druckausgleichselemente sind meist als Verschraubungen mit integrierter Spezialmembran ausgeführt, welche entsprechend am Gehäuse des jeweiligen Antriebsmoduls angebracht werden. Sie werden je nach Verwendungszweck aus Kunststoff und/oder Metall hergestellt und können neben der integrierten Spezialmembran zusätzlich auch Scheiben, Dichtungen, Dichtringe und/oder Tüllen enthalten. Ein Einsatz von Druckausgleichselementen bei Antriebsmodulen weist allerdings den Nachteil auf, dass das Druckausgleichselement einen entsprechenden Platz am Gehäuse bzw. an der Gehäuseoberfläche beansprucht und zusätzliche Kosten verursachen kann. So muss beispielsweise bei einem Einsatz in Bereichen mit speziellen Hygiene-Vorschriften, wie z.B. der Lebensmittel- und Getränkeindustrie, eine Reinigung und Lebensmittelechtheit der Druckausgleichselemente sichergestellt werden. Weiterhin können je nach Ausführung des Druckausgleichselements eine z.B. zyklische Wartung und/oder ein Austausch von Komponenten (z.B. Membran, Dichtungen, etc.) erforderlich sein.

Weiterhin wird der Druckausgleich bei Verwendung eines Druckausgleichselements direkt mit einer unmittelbaren Umgebung des Transportsystems bzw. der Antriebsmodule durchgeführt. Diese Umgebung kann je nach Anwendungsbereich des Transportsystems verstärkt durch Feuchtigkeit, Schmutz, Staub und/oder chemische Verunreinigungen geprägt sein, welche z.B. durch Dichtemängel der Verschraubung, der Membran, etc. des Druckausgleichselements in den Innenraum des Antriebsmodul eindringen können und z.B. zu einem höheren Wartungsbedarf des Transportsystems oder einer Verringerung der Lebensdauer führen können.

### Darstellung der Erfindung

Der Erfindung liegt daher die Aufgabe zugrunde, ein elektromagnetisches Transportsystem anzugeben, bei welchem auf einfache und kostengünstige Weise sowie ohne zusätzliche Montage- und/oder Wartungsmaßnahmen ein Druckausgleich zwischen dem zumindest einen luftdicht geschlossenen Antriebsmodul des Transportsystems und einer Umgebung des Transportsystems durchführbar ist.

Diese und weitere Aufgaben werden durch ein elektromagnetisches Transportsystem gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein elektromagnetisches Transportsystems, welches einen Stator und zumindest eine Transporteinheit aufweist, welcher entlang des Stators bewegbar angeordnet ist. Dabei weist der Stator zumindest ein Antriebsmodul mit einem luftdichten Gehäuse auf, in welchem eine Mehrzahl an Antriebsspulen angeordnet ist. Weiterhin ist ein Versorgungskabel vorgesehen, welches den Stator bzw. das zumindest eine Antriebsmodul für eine Bestromung der Antriebsspulen mit einer Versorgungsspannung verbindet, wobei in das Versorgungskabel ein Leerrohr integriert ist, welches innerhalb eines Außenmantel des Versorgungskabels angeordnet ist, wobei das Leerrohr an einem versorgungsseitigen Ende des Versorgungskabel mit einer Öffnung zu einer Umgebung im Bereich der Versorgungsspannung (z.B. einem Innenraum eines Schaltschranks) versehen, und wobei ein antriebsmodulseitiges Ende des Versorgungskabels mit dem zumindest einen Antriebsmodul derart verbunden ist, dass ein Austausch eines Mediums, insbesondere ein Luftaustausch, zwischen einem vom luftdichten Gehäuse gebildeten Innenraum des zumindest einen Antriebsmoduls und der Umgebung des Transportsystems, insbesondere im Bereich der Versorgungsspannung, nur über das Leerrohr erfolgt.

Der Hauptaspekt der vorgeschlagenen Lösung besteht darin, dass ein Austausch eines Mediums bzw. ein Luftaustausch zwischen dem zumindest einem Antriebsmodul des elektro-magnetischen Transportsystems und der Umgebung des Transportsystems, vor allem im Bereich der Versorgungsspannung, durch das im Versorgungskabel integrierte Leerrohr bei Über- oder Unterdruck im Antriebsmodul auch ein Druckausgleich mit der Umgebung des Transportsystems über das Leerrohr erfolgt. Der Druckausgleich im Transportsystem wird damit nur über das Leerrohr im Versorgungskabel ohne zusätzlichen Aufwand für Montage, Wartung, Reinigung, etc. von z.B. zusätzlichen Druckausgleichselementen und damit auch kostengünstig durchgeführt. Da der Druckausgleich bzw. der Austausch der Luft über die Öffnung am versorgungsseitigen Ende des Versorgungkabels erfolgt, welches im Bereich der Versorgungsspannung (z.B. Schaltschrank) angebracht ist, stammt die für den Druckausgleich bezogene Luft aus einer geschützten Umgebung (z.B. Innenraum des Schaltschranks). Dadurch verringert sich auch die Gefahr, dass Feuchtigkeit, Schmutz, Staub, chemische Verunreinigungen oder andere Verunreinigungen in das elektromagnetische Transportsystem, vor allem in das zumindest eine Antriebsmodul des Stators, gelangen.

Eine zweckmäßige Ausgestaltung des elektromagnetischen Transportsystems sieht vor, dass der Stator zumindest ein weiteres Antriebsmodul aufweist, welches über ein Leistungskabel mit dem zumindest einen Antriebskabel für eine Bestromung der Antriebsspulen des weiteren Antriebsmoduls verbunden ist. In das Leistungskabel ist ebenfalls ein Leerrohr integriert, welches innerhalb des Außenmantels des Leistungskabel angeordnet ist. Dabei sind ein erstes Ende des Leistungskabels mit dem zumindest einen Antriebsmodul des Stators und ein zweites Ende mit dem zumindest einen weiteren Antriebsmodul des Stators derart verbunden, dass ein Austausch des Mediums, insbesondere ein Luftaustausch, nur zwischen einem vom luftdichten Gehäuse gebildeten Innenraum des zumindest einen weiteren Antriebsmoduls und dem Innenraum des zumindest einen Antriebsmoduls über das Leerrohr im Leistungskabel erfolgt. D.h. ein Austausch des Mediums bzw. der Luft in den Innenräumen der Antriebsmodule und damit ein Druckausgleich zwischen den Antriebsmodulen kann nur über das im Leistungskabel integrierte Leerrohr erfolgen. Damit kann der Druckausgleich in einem Transportsystem mit zwei oder mehr Antriebsmodulen ebenfalls kostengünstig und ohne zusätzlichen Aufwand durchgeführt werden. Da der Medium- bzw. Luftaustausch für den Druckausgleich nur über das Leerrohr in den Leistungskabeln zwischen den Innenräumen der Antriebsmodule bzw. über das Leerrohr im Versorgungskabel, mit welchem eines der Antriebsmodule verbunden ist, mit der Umgebung im Bereich der Versorgungsspannung erfolgt, ist auch die Gefahr von Feuchtigkeits- und/oder Verunreinigungsproblemen durch ein feuchtes oder verunreinigtes Medium (Luft) stark reduziert.

Durch die Verbindung mit dem Leistungskabel können das zumindest eine Antriebsmodul und das zumindest eine weitere Antriebsmodul durch die Verbindung mit dem Leistungskabel eine Daisy-Chain bilden, bei welcher z.B. das zumindest eine Antriebsmodul über das Versorgungskabel mit der Versorgungsspannung bzw. über das Leerrohr und dessen Öffnung am versorgungsseitigen Ende des Versorgungskabels mit der Umgebung im Bereich der Versorgungsspannung verbunden ist, und das zumindest eine weitere Antriebsmodul nur indirekt - d.h. über das zumindest eine Antriebsmodul - an die Versorgungsspannung und die Umgebung angebunden ist.

Es ist weiterhin vorteilhaft, wenn eine Verbindung zwischen dem antriebsmodulseitigen Ende des Versorgungskabels und dem zumindest einen Antriebsmodul als Steckverbindung ausgestaltet ist. Idealerweise sind auch die Verbindungen zwischen dem ersten Ende des Leistungskabels und dem zumindest einen Antriebsmodul und zwischen dem zweiten Ende des Leistungskabels und dem zumindest einen weiteren Antriebsmodul als Steckverbindungen ausgeführt. Damit können die Antriebsmodule auf einfache Weise elektrisch und auch für den Druckausgleich mit der Umgebung und miteinander verbunden werden. Die antriebsmodulseitige Anbindung des Leerrohrs an das jeweilige Antriebsmodule kann z.B. über Bohrungen nichtbelegter Steck- bzw. Pinpositionen in Stecker und Buchse der Steckverbindung erfolgen, welche eine einfach zu nutzende Möglichkeit für einen Medium- bzw. Luftaustausch darstellen.

Dabei ist es weiterhin günstig, wenn die Steckverbindung zwischen dem zwischen dem antriebsmodulseitigen Ende des Versorgungskabels und dem zumindest einen Antriebsmodul und/oder die Steckverbindungen zwischen dem ersten Ende des Leistungskabels und dem zweiten Ende des Leistungskabels und einem jeweiligen Antriebsmodul mit einer Überwurfmutter zusätzlich abgedichtet sind. Damit wird sichergestellt, dass der Medium- bzw. Luftaustausch tatsächlich nur zwischen dem Antriebsmodul und der Umgebung im Bereich der Versorgungsspannung (z.B. Schaltschrankinnenraum) bzw. zwischen den jeweiligen Antriebsmodulen stattfindet.

Eine zweckmäßige Ausführungsvariante der Erfindung sieht vor, dass das Leerrohr am versorgungseitigen Ende des Versorgungskabels über das versorgungseitige Ende des Versorgungskabel hinausragt. Das Leerrohr kann dabei z.B. einen Überstand von ca 10 Millimetern aufweisen. Die Öffnung des Leerrohrs am versorgungseitigen Ende des Versorgungskabels ragt damit sicher in die Umgebung im Bereich der Versorgungsspannung, insbesondere in den Schaltschrankinnenraum.

Idealerweise ist das Leerrohr im Versorgungskabel bzw. in den Leistungskabeln aus Kunststoff ausgeführt. Als Kunststoff kann z.B. Polyamid verwendet werden.

### Kurzbeschreibung der Figuren

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig. 1 eine sehr einfache und beispielhafte Ausführungsform eines erfindungsgemäßen elektromagnetischen Transportsystems
Fig. 2 einen Querschnitt des Versorgungskabel des erfindungsgemäßen Transportsystems
Fig. 3 ein beispielhaftes Transportsystem in Form eines Langstatorlinearmotors mit einer Verkabelung mehrere Antriebsmodule durch das Versorgungskabel
Fig. 4 ein beispielhaftes Transportsystem in Form eines Planarmotors mit einer Verkabelung mehrerer Antriebsmodule durch das Versorgungskabel

### Ausführung der Erfindung

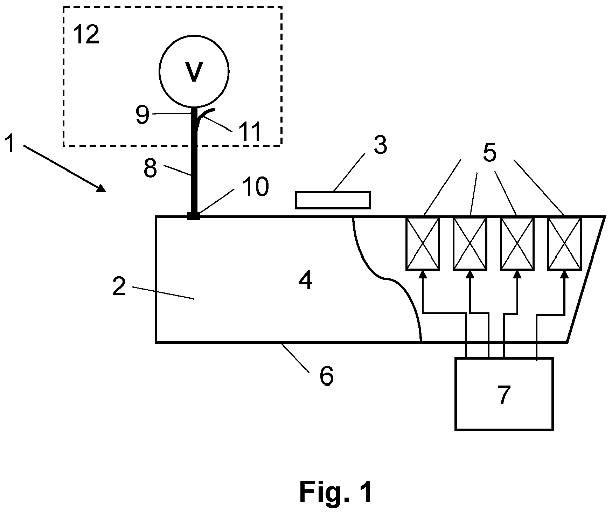

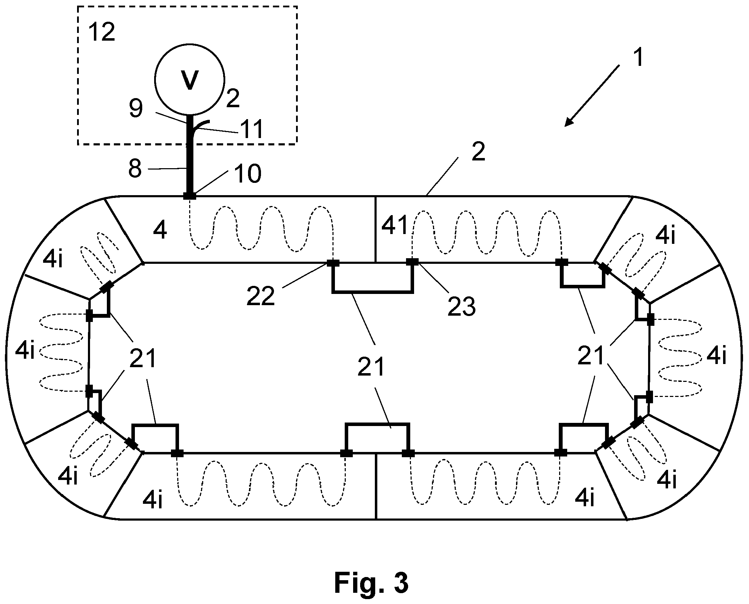

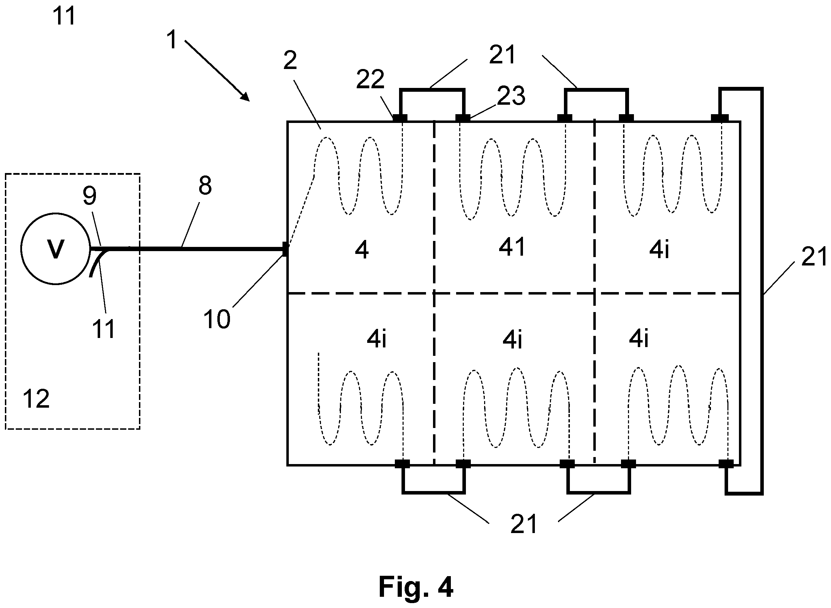

In Figur 1 ist beispielhaft und schematisch eine sehr einfache Ausführungsform eines elektromagnetischen Transportsystems 1 dargestellt, wobei das elektromagnetische Transportsystem 1 entweder in Form eines Langstatorlinearmotors, wie in Figur 3 beispielhaft dargestellt, oder in Form eines Planarmotors, wie in Figur 4 beispielhaft dargestellt, ausgeführt sein kann. Das Transportsystem 1 weist einen Stator 2 und zumindest eine Transporteinheit 3 auf. Der Stator 2 bildet den möglichen Transportpfad bzw. die mögliche Transportebene des Transportsystem 1 für die zumindest eine Transporteinheit 3, indem die Transporteinheit 3 entlang des Stators 2 bewegbar ist.

Im einfachsten Fall - wie in Figur 1 beispielhaft dargestellt - besteht der Stator 2 aus zumindest einem Antriebsmodul 4. Üblicherweise ist der Stator 2 eines elektromagnetischen Transportsystems 1 aus mehreren bzw. einer Mehrzahl von separaten Antriebsmodulen 4 zusammengesetzt. Am Antriebsmodul 4 sind eine Mehrzahl von Antriebsspulen 5 angeordnet - in Figur 1 nur beispielhaft für einen Teil des Antriebsmoduls 4 dargestellt. Die Antriebsspulen 5 sind meist positionsgenau auf einem Grundkörper (in Figur 1 nicht dargestellt) angeordnet und fixiert. Weiterhin weist das Antriebsmodul 4 ein Gehäuse 6 auf, welches zumindest die Antriebsspulen umgibt. Das Gehäuse 6 des Antriebsmoduls 4 kann luftdicht bzw. annähernd hermetisch abgeschlossen ausgeführt sein, um die Antriebsspulen 5 sowie gegebenenfalls am Antriebsmodul 4 angeordnete Sensoren, Elektronik, etc. vor verschiedenen äußeren Einflüssen (z.B. Feuchtigkeit, Staub, chemische Verunreinigungen, etc.) zu schützen, welchen das Transportsystem 1, insbesondere der Stator 2, je nach Anwendungsbereich des Transportsystems 1 ausgesetzt ist.

Für eine Regelung der Bewegung der zumindest einen Transporteinheit 3 ist beispielsweise eine Steuer- und Regelungseinheit 7 vorgesehen. Die Regelung der Bewegung der Transporteinheit 3 entlang des Transportpfades oder der Transportebene und die damit im Zusammenhang stehende Ansteuerung der beteiligten Antriebsspulen 5 sind beispielsweise aus der EP 3 385 110 A1 bzw. EP 3 376 166 A1 für Transportsysteme 1 in Form von Langstatorlinearmotoren oder aus der WO2021/105165 A1 bzw. WO 2021/175885 A1 für Transportsysteme 1 in Form von Planarmotoren hinlänglich bekannt. Nachdem es für die Erfindung aber nicht auf die konkrete Regelung bzw. Ansteuerung der Antriebsspulen 5 ankommt, wird das hier nicht näher erläutert. Im Prinzip werden durch entsprechend Ansteuerung der Steuer- und Regelungseinheit 7 die Antriebsspulen 5 im Bereich der zumindest einen Transporteinheit 3 bestromt bzw. es wird eine Spulenspannung angelegt, um ein bewegtes Antriebsmagnetfeld zu erzeugen. Dieses Antriebsmagnetfeld wirkt mit Antriebsmagneten zusammen, welche an der Transporteinheit 3 angeordnet sind, und bewirkt dadurch eine Bewegung der Transporteinheit 3 in eine gewünschte Bewegungsrichtung.

Um an die Antriebsspulen 5 die von der Ansteuerung vorgegebene Spulenspannung anlegen zu können bzw. um die Antriebsspulen 5 zum Bewegen der Transporteinheit 3 entsprechend bestromen zu können, weist das Transportsystem 1 ein Versorgungskabel 8 auf. Über das Versorgungskabel 8 ist der Stator 2 bzw. das zumindest eine Antriebsmodul 4 des Stators 2 mit einer Versorgungsspannung V verbunden. Das Versorgungskabel 8 kann beispielsweise auch zum Versorgen weiterer am Antriebsmodul 4 vorgesehener Einheiten (z.B. Sensoren, Elektronikeinheiten, lokale Steuereinheiten, etc.) mit der Versorgungsspannung V verwendet werden.

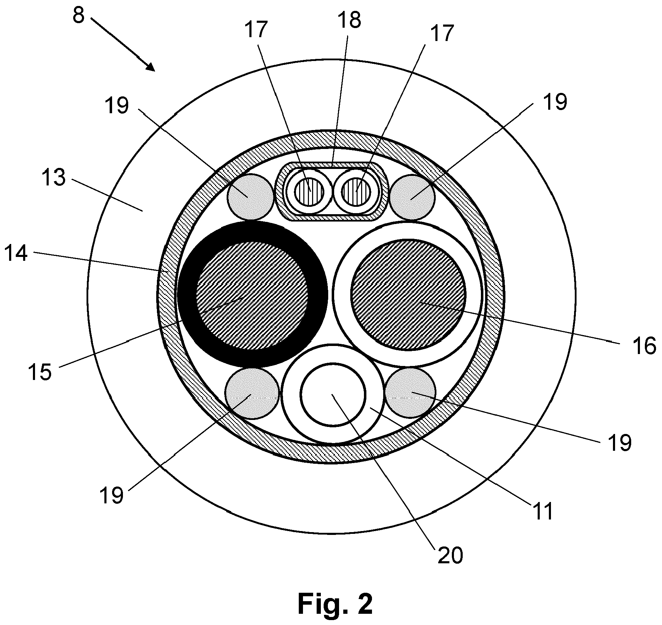

Für die Spannungsversorgung des Transportsystems 1 ist das Versorgungskabel 8 mit einem versorgungsseitigen Ende 9 mit der Versorgungsspannung V verbunden. Die Versorgungsspannung V kann z.B. mit weiteren Einheiten für Steuerung, Überwachung, etc. des Transportsystems 1 in einem Schaltschrank angeordnet sein, welche dann eine Umgebung 12 der Versorgungsspannung V bildet. Das versorgungseitige Ende 9 des Versorgungskabels 8 kann je nach Ausführungsform bzw. Kabeltyps des Versorgungskabels 8 (z.B. Kabel mit einem Leistungsleiter 15, 16 zur Energieübertragung, Kabel mit zwei Leistungsleitern 15, 16 zur Energieübertragung; Kabel, welche zusätzlich auch zumindest einen Signalleitung 17 ausweist, etc.) entsprechend konfektioniert sein. D.h., das versorgungsseitigen Ende 9 des Versorgungskabels 8 weist entsprechende Anschlüsse auf, um eine elektrische Verbindung des Versorgungskabels 8 bzw. des zumindest einen Leistungsleiters 15, 16 zur Versorgungsspannung V herzustellen. Umfasst das Versorgungskabel 8 - wie in Figur 2 beispielhaft dargestellt - auch zumindest einen Signalleiter 17 zur Signalübertragung zwischen dem Stator 2 bzw. dem zumindest einen Antriebsmodul 4 und z.B. Steuereinheiten, Messeinheiten, Einheiten für Sicherheitstechnik, etc., so kann das versorgungsseitige Ende 9 des Versorgungskabels 8 weitere, entsprechende Anschlüsse aufweisen, welche eine Verbindung des zumindest einen Signalleiters 17 z.B. zu diesen Einheiten herstellen können.

In das Versorgungskabel 8 ist weiterhin ein Leerrohr (Kapillare) 11 integriert, welche innerhalb eines Außenmantels 13 des Versorgungskabels 8 weitgehend parallel zum zumindest einen Leistungsleiter 15, 16 angeordnet ist. Am versorgungsseitigen Ende 9 des Versorgungskabels 8 ist das Leerrohr 11 offen auslaufend konfektioniert - d.h. das Leerrohr 11 endet am versorgungsseitigen Ende 9 des Versorgungskabels 8 mit einer Öffnung, welche einen Innenraum 20 des Leerrohrs 11 mit der Umgebung 12 der Versorgungsspannung V - z.B. mit einem Innenraum des Schaltschranks, in welchem die Versorgungsspannung V angeordnet ist, verbindet. Dabei kann das Leerrohr 11 - wie in Figur 1 dargestellt - beispielsweise mit einem Überstand (z.B. von 10 mm oder mehr) über das versorgungsseitigen Ende 9 des Versorgungskabels 8 hinausragen.

Mit einem antriebsmodulseitigen Ende 10 ist das Versorgungskabel 8 mit dem Stator 2 bzw. mit dem zumindest einen Antriebsmodul 4 verbunden, um den Stator 2 mit elektrischer Energie bzw. Spannung zu versorgen und um Signale zu übertragen, sofern im Versorgungskabel 8 zumindest ein Signalleiter 17 vorgesehen ist. Weiterhin ist die Verbindung zwischen dem antriebsmodulseitigen Ende 10 des Versorgungskabels 8 mit dem zumindest einen Antriebsmodul 4 derart ausgestaltet, dass ein Austausch eines Mediums bzw. ein Luftaustausch zwischen einem vom luftdichten Gehäuse 6 gebildeten Innenraum des zumindest einen Antriebsmoduls 4 und der Umgebung 12 ausschließlich über das Leerrohr 11 erfolgt. D.h., das Medium bzw. die Luft im Innenraum des Antriebsmoduls 4 kann nur über das Leerrohr 11 mit der Umgebung 12 im Bereich der Versorgungsspannung V (z.B. Innenraum des Schaltschranks) ausgetauscht werden.

Die Verbindung zwischen dem antriebsmodulseitigen Ende 10 des Versorgungskabels 8 und dem Antriebsmodul 4 kann dazu beispielsweise als Steckverbindung ausgestaltet sein. Dazu kann sowohl am antriebsmodulseitigen Ende 10 des Versorgungskabels 8 als auch am Antriebsmodul 4 bzw. im Gehäuse 6 des Antriebsmoduls 4 jeweils ein Anschlusselement vorgesehen sein. Die Anschlusselemente können z.B. derart ausgestaltet sein, dass sie zusammenpassen und eine elektrisch leitende Verbindung zumindest für die Spannungsversorgung des Stators 2 bzw. des Antriebsmoduls 4 und gegebenenfalls für eine Signalübertragung herstellen. Die Anschlusselemente am antriebsseitigen Ende 10 des Versorgungskabel 8 und am Antriebsmodul 4 können dazu entsprechend der Ausführungsform des Versorgungskabels 8 - z.B. ein Leistungsleiter 15, 16, zwei Leistungsleiter 15, 16, kein oder zumindest ein Signalleiter 17 - konfektioniert. Für die Steckverbindung kann z.B. vorgesehen sein, dass das Anschlusselement am antriebsseitigen Ende 10 des Versorgungskabel 8 als Buchse und das Anschlusselement am Antriebsmodul 4 als Stecker ausgeführt sein. Es ist aber auch denkbar, dass das Anschlusselement am antriebsseitigen Ende 10 des Versorgungskabel 8 als Stecker und das Anschlusselement am Antriebsmodul 4 als Buchse ausgeführt ist.

Für den Medium- bzw. Luftaustausch zwischen dem Innenraum des Antriebsmoduls 4 und der Umgebung 12 über das Leerrohr 11, kann das Leerrohr 11 beispielsweise im Anschlusselement enden, welches am antriebsmodulseitigen Ende 10 des Versorgungskabels 8 angebracht ist. Dazu sind sowohl das Anschlusselement am antriebsmodulseitige Ende 10 des Versorgungskabels 8 als auch das Anschlusselement am Antriebsmodul 4 zusätzlich so ausgeführt, dass der Medium- bzw. Luftaustausch zwischen dem Innenraum des Antriebsmoduls 4 und der Umgebung 12 nur über das Leerrohr 11 erfolgen kann. Die Anschlusselemente können dazu z.B. Durchgangslöcher, etc. aufweisen, über welche der Luftaustausch stattfinden kann. Idealerweise können z.B. in den Anschlusselementen bereits vorhandene Durchgangslöcher für den Medium- bzw. Luftaustausch zwischen dem Innenraum des Antriebsmoduls 4 und dem Leerrohr 11 im Verbindungskabel 8 genutzt werden. Diese Durchgangslöcher im jeweiligen Anschlusselement sind üblicherweise nicht verwendete Positionen, welche für Anschlüsse bzw. Pins zum Verbinden von z.B. Signalleitungen 17 genutzt werden könnten. Die unbenutzten Durchgangslöcher in den Anschlusselementen (z.B. Stecker und Buchse) können beispielsweise für eine Verbindung des Leerrohrs 11 im Versorgungskabel 8 mit dem Innenraum des Antriebsmoduls 4 und damit für den Medium- bzw. Luftaustausch zwischen dem Innenraum des Antriebsmoduls 4 und der Umgebung 12 über das Leerrohr 11 verwendet werden. Zusätzlich kann die Verbindung zwischen dem antriebsmodulseitige Ende 10 des Versorgungskabels 8 und dem Antriebsmodul 4, welche z.B. als Steckverbindung ausgeführt ist, mittels einer Überwurfmutter noch luftdicht abgeschlossen werden, um sicherzustellen, dass der Medium- bzw. Luftaustausch ausschließlich über das im Versorgungskabel 8 integrierte Leerrohr 11 erfolgt.

Durch den Austausch des Mediums bzw. der Luft zwischen dem Antriebsmodul 4 bzw. seinem Innenraum und der Umgebung 12 im Bereich der Versorgungsspannung V, wie z.B. dem Innenraum des Schaltschranks, in welchem die Versorgungsspannung V angebracht ist, erfolgt auch ein Druckausgleich zwischen dem Innenraum des Antriebsmoduls 4 und der Umgebung 12, wie z.B. dem Innenraum des Schaltschranks. Während eines Betriebs des Transportsystems 1 kann es aufgrund elektrischer Verlustleistung - vor allem durch das Bestromen der Antriebsspulen 5 - zur Erwärmung des Antriebsmoduls 4 kommen. Das im Innenraum des Antriebsmodul 4 befindliche Medium (z.B. Luft) dehnt sich aus. Das hat aufgrund des luftdichten Gehäuses 6 des Antriebsmoduls 4 einen steigenden Druck bzw. Überdruck im Antriebsmodul 4 zur Folge. Dieser Überdruck kann durch den Luftaustausch mit der Umgebung 12 über das Leerrohr 11 bzw. die Kapillare 11 im Versorgungskabel 8 abgegeben werden. Der Druck im Innenraum des Antriebsmodul 4 kann so an den Druck der Umgebung 12 im Bereich der Versorgungsspannung V angeglichen werden.

Wird die Bestromung der Antriebsspulen 5 während des Betriebs des Transportsystems 1 im Antriebsmodul 4 beendet oder unterbrochen, da gerade keine Transporteinheit 3 entlang des Antriebsmoduls 4 bewegt werden soll, so kühlt das Antriebsmodul 4 aufgrund sinkender elektrischen Verlustenergie ab. Das Medium bzw. die Luft im luftdichten Gehäuse 6 des Antriebsmoduls 4 zieht sich durch die Abkühlung zusammen, was einen sinkenden Druck bzw. Unterdruck im Antriebsmodul 4 zur Folge hat. Dieser Unterdruck kann ebenfalls durch den Luftaustausch mit der Umgebung 12 über das Leerrohr 11 bzw. die Kapillare 11 im Versorgungskabel 8 ausgeglichen werden. Über das Leerrohr 11 wird z.B. Luft aus der Umgebung 12 (z.B. dem Innenraum des Schaltschranks) in das Antriebsmodul 4 gesaugt und damit der interne Druck wieder an einen Druck der Umgebung 12 angeglichen.

Der Austausch des Mediums bzw. der Luft erfolgt dabei über die Öffnung des Leerrohrs 11 am versorgungsseitigen Ende 9 des Versorgungskabels 8. D.h. es wird - insbesondere beim Ausgleich eines Unterdrucks innerhalb des Gehäuses 6 des Antriebsmoduls 4 - Luft aus der Umgebung 12 der Versorgungsspannung V (z.B. Schaltschrankinnenraum) bezogen. Diese Umgebung 12 stellt eine im gewissen Maße geschützte Umgebung dar, wodurch eine Gefahr von Feuchtigkeits- und/oder Verunreinigungsproblemen verringert ist.

Auch externe Einflüsse, wie z.B. Änderungen der Umgebungsbedingungen, Temperaturänderungen in der Umgebung des Transportsystems 1, etc., können zu einer Erwärmung oder Abkühlung des Antriebsmoduls 4 und damit zu Druckschwankungen innerhalb des Antriebsmoduls 4 führen, welche über das im Versorgungskabel 8 integrierte Leerrohr 11 ausgeglichen werden können.

Figur 2 zeigt beispielhaft und schematisch einen Querschnitt durch das Versorgungskabel 8, mit welchem der Stator 2 bzw. das zumindest eine Antriebsmodul 4 mit der Versorgungsspannung V verbunden ist. Das Versorgungskabel 8 weist einen Außenmantel 13 aus einem thermoplastischen Kunststoff (z.B. thermoplastische Polyurethane oder kurz: TPU) auf. An einer Innenseite des Außenmantels 13 ist ein Geflecht 14 z.B. für eine Schirmung und/oder für eine Stabilität des Kabels 8 angeordnet. In einem vom Außenmantel 13 gebildeten Hohlraum ist zumindest ein von einer Isolierung umgebender Leistungsleiter 15, 16 angeordnet. Da bei elektromagnetischen Transportsystemen 1 zur Spannungsversorgung häufig Gleichspannung verwendet wird, weist das Versorgungskabel 8 beispielsweise zwei Leistungsleiter 15, 16 auf, über welche die Energieübertragung bzw. die Spannungsversorgung des über das Versorgungskabel 8 mit der Versorgungsspannung V verbundenen Stators 2 erfolgt. Weiterhin kann das Versorgungskabel 8 auch zumindest eine Signalleiter 17 umfassen. Bei dem in Figur 2 dargestellten Querschnitt durch das Versorgungskabel 8 sind beispielsweise zwei Signalleiter 17 für eine Anbindung von verdrahteter Sicherheitstechnik vorgesehen. Die Signaleiter 17 weisen z.B. eine Isolierung auf und sind z.B. durch eine eigene Ummantelung 18 bzw. Schirmung 18 von den Leistungsleitern 15, 16 isoliert. Über die Signalleiter 17 können z.B. Steuersignale, Messsignale, etc. zwischen dem Transportsystem 1 bzw. dem Stator 2 und Steuereinheiten, Einheiten der Sicherheitstechnik, etc. übertragen werden. Weiterhin weist das Versorgungskabel 8 noch Füllelemente 19 auf, welche für eine entsprechende Stabilität des Versorgungskabels 8 sorgen.

Weiterhin ist in das Versorgungskabel 8 das Leerrohr 11 bzw. die Kapillare 11 integriert. Das Leerrohr 11 kann z.B. im vom Außenmantel 13 gebildeten Hohlraum angeordnet sein und z.B. parallel zu den Leistungsleitern 15, 16 verlaufen. Das Leerrohr 11 bzw. die Kapillare 11 ist aus Kunststoff (z.B. Polyamid) hergestellt und kann beispielsweise einen Innendurchmesser und Außendurchmesser im Millimeterbereich aufweisen. So kann das Leerrohr z.B. einen Innendurchmesser von ca. 1,5 bis 2 Millimeter und einen Außendurchmesser von ca. 3 Millimeter aufweisen. Der vom Innenraum 20 des Leerrohrs 11 gebildete Hohlraum wird während des Betriebs des Transportsystems 1 für einen Luftaustausch bzw. Druckausgleich zwischen dem Antriebsmodul 4 des Stators 2 und der Umgebung 12 der Versorgungsspannung V verwendet, wenn das Antriebsmodul 4 des Stators 2 über das Versorgungskabel 8 mit der Versorgungsspannung V verbunden ist.

Weist der Stator 2 eines Transportsystems 1 - wie in der Folge in den Figuren 3 und 4 gezeigt - neben dem zumindest einen Antriebsmodul 4 zumindest ein weiteres Antriebsmodul 41 auf, so kann das zweite Antriebsmodul 41 über ein Leistungskabel 21 mit dem zumindest einen Antriebsmodul 4 verbunden sein, um das zumindest eine weitere Antriebsmodul 41 über das Antriebsmodul 4 mit der Versorgungsspannung V elektrisch zu verbinden. D.h., das zumindest eine weitere Antriebsmodul 41 ist indirekt über das Antriebsmodul 4, welches über das Versorgungskabel 8 direkt mit der Versorgungsspannung V verbunden ist, an die Versorgungsspannung V angebunden.

Das Leistungskabel 21 weist üblicherweise einen Aufbau auf, welche zu jenem des Versorgungskabels 8 ident ist. Das Leistungskabel 21 kann beispielsweise ebenfalls wie in Figur 2 dargestellt ausgestaltet sein. Auf jeden Fall ist auch in das Leistungskabel 21 ein Leerrohr 11 aus Kunststoff (z.B. Polyamid) integriert, welche z.B. parallel zum zumindest einen Leistungsleiter 15, 16 innerhalb des Außenmantels 13 des Kabels 21 angeordnet ist. Das Leistungskabel 21 ist - für die Verbindung zwischen dem Antriebsmodul 4 und dem weiteren Antriebsmodul 41 - mit einem ersten Ende 22 mit dem Antriebsmodul 4 und mit einem zweiten Ende 23 mit dem weiteren Antriebsmodul 41 verbunden, wobei die Verbindungen jeweils derart ausgestaltet sind, dass ein Austausch des Mediums bzw. der Luft zwischen einem Innenraum des weiteren Antriebsmoduls 41, welcher vom luftdichten Gehäuse 6 des weiteren Antriebsmoduls 41 gebildet wird, und dem Innenraum des zumindest einen Antriebsmoduls 4 ausschließlich über das Leerrohr 11 bzw. die Kapillare 11 im Leistungskabel 21 erfolgt. D.h., ein Luftaustausch und damit Druckausgleich zwischen dem zumindest einen Antriebsmodul 4 und dem weiteren Antriebsmodul 41 findet über das in das Leistungskabel 21 integrierte Leerrohr 11 statt. Die Verbindungen zwischen dem ersten Ende 22 des Leistungskabels 21 und dem Antriebsmodul 4 bzw. zwischen dem zweiten Ende 23 des Leistungskabels 21 und dem weiteren Antriebsmodul 41 können z.B. als Steckverbindungen ausgestaltet sein. Dazu können sowohl an den Enden 22, 23 des Leistungskabels 21 als auch an den Antriebsmodulen 4, 41 entsprechend zusammenpassende Anschlusselemente vorgesehen sein. So können die Anschlusselemente an den Enden 22, 23 des Leistungskabel 21 z.B. als Buchsen und die Anschlusselemente an den Antriebsmodulen 4, 41 als Stecker ausgeführt sein. Es können aber auch die Anschlusselemente das Leistungskabels 21 als Stecker und die Anschlusselemente der Antriebsmodule 4, 41 als Buchsen ausgestaltet sein. Weiterhin kann die Steckverbindung zwischen dem jeweiligen Ende 22, 23 des Leistungskabels 21 und dem jeweiligen Antriebsmodul 4, 41 z.B. mittels einer Überwurfmutter luftdicht abgeschlossen werden, um einen Medium- bzw. Luftaustausch über das ins Leistungskabel 21 integrierte Leerrohr 11 sicherzustellen.

Figur 3 zeigt beispielhaft und schematisch eine weitere Ausführungsform eines elektromagnetisches Transportsystems 1, wobei das Transportsystem 1 in Form eines Langstatorlinearmotors ausgeführt ist. Das Transportsystem 1 besteht dabei aus einer Mehrzahl i von separaten Antriebsmodulen 4, 41, 4i, welche zu einem Stator 2 des Langstatorlinearmotors zusammengesetzt sind. Die Antriebsmodule 4, 41, 4i weisen jeweils ein luftdichtes Gehäuse 6 auf, in welchen die Antriebsspulen 5 angeordnet sind, und können auf einer z.B. ortfesten Stützkonstruktion (in Figur 3 nicht dargestellt) angeordnet sein. Der Stator 2 bildet den möglichen Transportpfad, welcher - wie z.B. in Figur 3 dargestellt - geschlossen oder auch offen ausgeführt sein kann. Der Transportpfad kann auch mehrere Zweige aufweisen, welche wiederum offen oder geschlossen ausgeführt sein können und über Weichen miteinander verbunden sind. Die Antriebsmodule 4, 41, 4i können auch in verschiedenen geometrischen Formen, beispielsweise Geradenmodule oder Kurvenmodule, ausgeführt sein, um verschiedene Transportpfade realisieren zu können, wie beispielsweise in der EP 3 243 772 B1 beschrieben.

Zumindest ein Antriebsmodul 4 des Stators 2 ist über das Versorgungskabel 8 mit der Versorgungsspannung V verbunden. Dieses - in der Folge als erstes Antriebsmodul 4 bezeichnete - Antriebsmodul 4 ist über das Leistungskabel 21 mit einem weiteren (in Folge als zweites Antriebsmodul 41 bezeichneten) Antriebsmodul 41 verbunden, wodurch auch das zweite Antriebsmodul 41 - über das erste Antriebsmodul 4 - mit der Versorgungsspannung V elektrisch verbunden ist. Dies ist durch die im ersten Antriebsmodul 4 verlaufende strichlierte Linie angedeutet. Das zweite Antriebsmodul 41 ist ebenfalls mit einen weiteren Antriebsmodul 4i über ein Leistungskabel 21 elektrisch verbunden. Damit wird das weitere Antriebsmodul 4i indirekt - über das erste Antriebsmodul 4 und das zweite Antriebsmodul 41 (wie mit den in den Antriebsmodulen 4, 41 verlaufenden strichlierten Linien angedeutet) - von der Versorgungsspannung V mit Energie versorgt. Die weiteren Antriebsmodule 4i können ebenfalls über Leistungskabel 21 seriell miteinander verbunden werden, bis alle Antriebsmodule 4, 41, 4i zumindest indirekt an die Versorgungsspannung V angebunden sind. Neben der Energieversorgung können auch Signale über das Versorgungskabel 8 und die Leistungskabel 21 zu bzw. von allen Antriebsmodulen 4, 41, 4i übertragen werden, sofern das Versorgungskabel 8 und die Leistungskabel 21 zumindest einen Signalleiter 17 aufweisen. Durch die Verbindung über die Leistungskabel 21 bilden die Antriebsmodule 4, 41, 4i eine so genannte Daisy-Chain, bei welcher das erste Antriebsmodul 4 direkt - über das Versorgungskabel 8 - mit der Versorgungsspannung V verbunden ist. Alle weiteren Antriebsmodule 41, 4i sind indirekt über ihr jeweiliges Vorgänger-Antriebsmodul 4, 41, 4i mit der Versorgungsspannung V verbunden.

Da sowohl im Versorgungskabel 8 als auch in den Leistungskabeln 21 das Leerrohr 11 integriert ist, und die Antriebsmodule 4, 41, 4i sowie die Verbindungen zwischen den Kabeln 8, 21 und den Antriebsmodulen 4, 41, 4i luftdicht ausgeführt sind, erfolgt zwischen den Antriebsmodulen 4, 41, 4i ein Medium- bzw. Luftaustausch nur über das Leerrohr 11 im jeweiligen Leistungskabel 21. Der Medium- bzw. Luftaustausch des ersten Antriebsmodul 4 erfolgt dabei einerseits über das Leerrohr 11 im Leistungskabel 21 mit dem zweiten Antriebsmodul 41 und mit der Umgebung 12 der Versorgungsspannung V (z.B. Schaltschrankinnenraum) über das Leerrohr 11 im Versorgungskabel 8. Für den Medium- bzw. Luftaustausch mit der Umgebung 12 endet das im Versorgungskabel 8 integrierte Leerrohr 11 am versorgungseitigen Ende 9 des Versorgungskabel 8 mit einer Öffnung, welche den Innenraum 20 des Leerrohrs 11 mit der Umgebung 12 der Versorgungsspannung V - z.B. dem Innenraum des Schaltschranks verbindet. Ein Druckausgleich zwischen den Antriebsmodulen 4, 41, 4i und mit der Umgebung 12 im Bereich der Versorgungsspannung V erfolgt damit ebenfalls über die Leerrohre 11, welche in den Leistungskabeln 21 bzw. im Versorgungskabel 8 integriert sind. Durch die in der Regel vor Feuchtigkeit, Staub oder anderen Verunreinigungen geschützte Umgebung 12 der Versorgungsspannung V (z.B. Schaltschrankinnenraum) sind die Antriebsmodule 4, 41, 4i vor möglichen nachteiligen Einflüssen (z.B. Verschmutzung, Nässe, etc.) geschützt.

Figur 4 zeigt beispielhaft und schematisch ein elektromagnetisches Transportsystem 1 in Form eines Planarmotors. Das Transportsystem 1 weist einen Stator 2 auf, welcher eine Transportebene ausbildet. Im dargestellten Beispiel ist die Transportebene z.B. eine horizontale Ebene. Es wären aber natürlich auch andere Anordnungen möglich, beispielsweise vertikal oder in einem bestimmten Winkel geneigt. Im Wesentlichen hängt die Anordnung der Transportebene von der jeweiligen Verwendung und einem jeweiligen Einsatzbereich des Transportsystems 1 ab. Der Stator 2 ist hier z.B. aus mehreren Antriebsmodulen 4, 41, 4i aufgebaut, die aneinandergrenzen, um die Transportebene auszubilden. Dadurch kann das Transportsystem 1 modular aufgebaut werden und es können Transportebenen mit verschieden großen Flächen realisiert werden. Natürlich ist dieser modulare Aufbau aber nur optional und der Stator 2 könnte auch nur durch einem einzigen Antriebsmodul 4 ausgebildet sein. In der Transportebene des Stators 2 können eine oder mehrere Transporteinheiten 3 (in Figur 4 aus Gründen der Übersichtlichkeit nicht dargestellt), zumindest zweidimensional bewegt werden.

Die Antriebsmodule 4, 41 4i weisen wieder jeweils ein luftdichtes Gehäuse 6, in welchem die Antriebsspulen 5 des jeweiligen Antriebsmoduls 4, 41, 4i angeordnet sind. Um ein Magnetfeld zu erzeugen, kann den Antriebsspulen 5 ein elektrischer Strom eingeprägt werden bzw. eine entsprechende Spulenspannung an die Antriebsspulen 5 angelegt werden. Für die Versorgung mit elektrischer Energie ist die Versorgungsspannung V vorgesehen, welche über das Versorgungskabel 8 mit einem der Antriebsmodule 4, 41, 4i - hier einem ersten Antriebsmodul 4 - verbunden ist. An dieses erste Antriebsmodul 4 ist dann über ein Leistungskabel 21 ein weiteres bzw. zweites Antriebsmodul 41 des Stators 2 angebunden, um über das direkt mit der Versorgungsspannung V verbundene, erste Antriebsmodul 4 mit Spannung bzw. Energie versorgt zu werden. An das zweite Antriebsmodul 41 ist dann über ein weiteres Leistungskabel 21 wieder ein weiteres Antriebsmodul 4i angebunden, usw. - bis alle Antriebsmodule 4, 41, 4i über die Leistungskabel 21 zumindest indirekt an die Versorgungsspannung V angebunden sind und - wie mittels der strichlierten Linien innerhalb der Antriebsmodule 4, 41, 4i angedeutet - mit Spannung bzw. Energie versorgt werden. Über die Verkabelung mit dem Versorgungskabel 8 und die Leistungskabel 21 kann zusätzlich auch eine Signalübertragung erfolgen, sofern die Kabel 8, 21 dazu ausgestaltet sind. Die Antriebsmodule 4, 41, 4i bilden durch die Verkabelung über die Leistungskabel 21 wieder eine so genannte Daisy-Chain.

Auch beim Transportsystem 1 in Form eines Planarmotors ist sowohl im Versorgungskabel 8 als auch in den Leistungskabeln 21, welche die Antriebsmodule 4, 41, 4i miteinander verbinden, ein Leerrohr 11 integriert. Die Antriebsmodule 4, 41, 4i weisen ebenfalls luftdichte Gehäuse 6 auf und auch die Verbindungen zwischen dem ersten Antriebsmodul 4 und dem Versorgungskabel 8 als auch die Verbindungen zwischen den Leistungskabeln 21 und den Antriebsmodulen 4, 41, 4i sind luftdicht ausgeführt. Dadurch kann ein Medium- bzw. Luftaustausch und der damit verbundene Druckausgleich zwischen den Antriebsmodulen 4, 41, 4i nur über das Leerrohr 11 im jeweiligen Leistungskabel 21 erfolgen. Ein Medium- bzw. Luftaustausch und der damit verbundene Druckausgleich mit der Umgebung 12 (z.B. Schaltschrankinnenraum) erfolgt dann über das Leerrohr 11 im Versorgungskabel 8 und das erste Antriebsmodul 4. D.h. der Luftaustausch mit der Umgebung 12 (z.B. Schaltschrankinnenraum) erfolgt für alle Antriebsmodule 4, 41, 4i über das Leerrohr 11, wobei die Luft zwischen den über die Leistungskabel 21 verbundenen Antriebsmodulen 4, 41, 4i ausgetauscht wird und nur das ersten Antriebsmodul 4, welches mit der Versorgungsspannung V verbunden ist, die Luft mit der Umgebung 12 der Versorgungsspannung V austauscht. Dazu endet das im Versorgungskabel 8 integrierte Leerrohr 11 am versorgungseitigen Ende 9 des Versorgungskabel 8 mit einer Öffnung zur Umgebung 12 der Versorgungsspannung V - z.B. dem Innenraum des Schaltschranks. Der Druck zwischen den Antriebsmodulen 4, 41, 4i gleicht sich damit ebenfalls über die Leerrohre 11 in den Leistungskabeln 21 aus. Ein Druckausgleich mit der Umgebung 12 erfolgt über das Leerrohr 11 im Versorgungskabel 8 zwischen dem ersten, mit der Versorgungsspannung V verbundenen Antriebsmodul 4 und der Umgebung 12 der Versorgungsspannung V. Durch die in der Regel vor Feuchtigkeit, Staub oder anderen Verunreinigungen geschützte Umgebung 12 der Versorgungsspannung V (z.B. Schaltschrankinnenraum) sind auch hier die Antriebsmodule 4, 41, 4i vor möglichen nachteiligen Einflüssen (z.B. Verschmutzung, Nässe, etc.) geschützt.

### Bezugszeichenliste

- 1: elektromagnetische Transportsystem
- 2: Stator
- 3: Transporteinheit
- 4: Antriebsmodul
- 41: weiteres, zweites Antriebsmodul
- 4i: weitere Antriebsmodule
- 5: Antriebsspulen
- 6: Gehäuse des Antriebsmoduls
- 7: Steuer- und Regelungseinheit
- 8: Versorgungskabel
- 9: versorgungsseitiges Ende des Versorgungskabels
- 10: antriebsmodulseitiges Ende des Versorgungskabels
- 11: Leerrohr, Kapillare
- 12: Umgebung einer Versorgungsspannung bzw. Schaltschrankinnenraum
- 13: Außenmantel
- 14: Geflecht, Schirmung
- 15: erster Leistungsleiter
- 16: zweiter Leistungsleiter
- 17: Signalleiter
- 18: Signaleiterschirmung/-ummantelung
- 19: Füllelemente
- 20: Innenraum des Leerrohrs
- 21: Leistungskabel
- 22: erstes Ende des Leistungskabels
- 23: zweites Ende des Leistungskabels

- V: Versorgungsspannung

## Patentansprüche

1. Elektromagnetisches Transportsystem (1) mit einem Stator (2) und zumindest einer Transporteinheit (3), welche entlang des Stators (2) bewegbar angeordnet ist, wobei der Stator (2) zumindest ein Antriebsmodul (4) mit einem luftdichten Gehäuse (6) aufweist, in welchem eine Mehrzahl von Antriebspulen (5) angeordnet ist, und wobei ein Versorgungskabel (8) vorgesehen ist, welches das zumindest eine Antriebsmodul (4) des Stators (2) für eine Spannungsversorgung mit einer Versorgungsspannung (V) verbindet, **dadurch gekennzeichnet, dass** in das Versorgungskabel (8) ein Leerrohr (11) integriert ist, welches innerhalb eines Außenmantels (13) des Versorgungskabels (8) angeordnet ist, **dass** das Leerrohr an einem versorgungsseitigen Ende (9) des Versorgungskabel (8) mit einer Öffnung versehen ist, **und dass** ein antriebsmodulseitiges Ende (10) des Versorgungskabels (8) mit dem zumindest einen Antriebsmodul (4) derart verbunden ist, dass ein Austausch eines Mediums, insbesondere ein Luftaustausch, zwischen einem vom luftdichten Gehäuse (6) gebildeten Innenraum des zumindest einen Antriebsmoduls (4) und einer Umgebung (12) über das Leerrohr (11) erfolgt.

2. Transportsystem nach Anspruch 1, **dadurch gekennzeichnet, dass** der Stator (2) zumindest eine weiteres Antriebsmodul (41, 4i) aufweist, welches über ein Leistungskabel (21) mit dem zumindest einen Antriebsmodul (4) verbunden ist, wobei in das Leistungskabel (21) ebenfalls ein Leerrohr (11) integriert ist, und wobei ein erstes Ende (22) des Leistungskabels (21) mit dem zumindest einen Antriebsmodul (4) und ein zweites Ende (23) mit dem zumindest einen weiteren Antriebsmodul (41, 4i) derart verbunden sind, dass ein Austausch des Mediums, insbesondere ein Luftaustausch, zwischen einem vom luftdichten Gehäuse (6) gebildeten Innenraum des zumindest einen weiteren Antriebsmoduls (41, 4i) und dem Innenraum des zumindest einen Antriebsmoduls (4) über das Leerrohr (11) im Leistungskabel (21) erfolgt.

3. Transportsystem nach Anspruch 2, **dadurch gekennzeichnet, dass** eine Verbindung zwischen dem ersten Ende (22) des Leistungskabels (21) und dem zumindest einen Antriebsmodul (4) sowie eine Verbindung zwischen dem zweiten Ende (23) des Leistungskabels (21) und dem zumindest einen weiteren Antriebsmodul (41, 4i) als Steckverbindung ausgestaltet ist.

4. Transportsystem nach einem der vorangegangenen Ansprüche, **dadurch gekennzeichnet, dass** eine Verbindung zwischen dem antriebsmodulseitigen Ende (10) des Versorgungskabels (8) und dem zumindest einen Antriebsmodul (4) als Steckverbindung ausgestaltet ist.

5. Transportsystem nach Anspruch 3 oder 4, **dadurch gekennzeichnet, dass** die Steckverbindung zwischen dem antriebsmodulseitigen Ende (10) des Versorgungskabels (8) und dem zumindest einen Antriebsmodul (4) und/oder die Steckverbindungen zwischen dem ersten Ende (22) des Leistungskabels (21) und dem zweiten Ende (23) des Leistungskabels (21) und einem jeweiligen Antriebsmodul (4, 41, 4i) mit einer Überwurfmutter abgedichtet sind.

6. Transportsystem nach einem der vorangegangenen Ansprüche, **dadurch gekennzeichnet, dass** am versorgungseitigen Ende (9) des Versorgungskabel (8) das Leerrohr (11) über das versorgungseitige Ende (9) des Versorgungskabel (8) hinausragt.

7. Transportsystem nach einem der vorangegangenen Ansprüche, **dadurch gekennzeichnet, dass** das Leerrohr (11) aus Kunststoff, insbesondere Polyamid, ausgeführt ist.

8. Transportsystem nach einem der vorangegangenen Ansprüche, **dadurch gekennzeichnet, dass** das zumindest eine Antriebsmodul (4) und das zumindest eine weitere Antriebsmodul (41, 4i) durch die Verbindung mit dem Leistungskabel (21) eine Daisy-Chain bilden.
